# EUROPÄISCHE PATENTSCHRIFT

(11) **EP 1 391 594 B1**
(45) Veröffentlichungstag und Bekanntmachung des Hinweises auf die Patenterteilung: **07.12.2011**
(21) Anmeldenummer: 03018284.4
(22) Anmeldetag: 12.08.2003
(51) Int. Cl.: F02B 31/06, F02D 9/10, F02D 9/16

(54) **Variabler Einlasskanal für eine Hubkolben-Brennkraftmaschine**
Variable intake passage for an internal combustion engine
Passage d'admission variable pour moteur à combustion interne

(30) Priorität: 22.08.2002 DE 10238396
(43) Veröffentlichungstag der Anmeldung: 25.02.2004
(73) Patentinhaber: GM Global Technology Operations LLC, Detroit, MI 48265-3000 (US)
(72) Erfinder: Löbig, Arnold, 64331 Weiterstadt-Riedbahn (DE)

(56) Entgegenhaltungen:
- EP-A- 0 626 509
- EP-A- 1 006 266
- DE-A1- 19 644 892
- GB-A- 534 124
- US-A- 3 868 940
- US-A- 3 884 209
- US-A- 6 006 721
- PATENT ABSTRACTS OF JAPAN Bd. 010, Nr. 130 (M-478), 14. Mai 1986 (1986-05-14) & JP 60 256515 A (KUBOTA TEKKO KK), 18. Dezember 1985 (1985-12-18)

## Beschreibung

Die Erfindung betrifft einen variablen Einlasskanal für eine Hubkolben-Brennkraftmaschine gemäß den Merkmalen des Patentanspruches 1.

Der Zweck eines Einlasskanals besteht darin, bei bestimmten Betriebszuständen der Brennkraftmaschine in gezielter Weise eine drallartige Bewegung der Zylinderladung im Verbrennungsraum zu erzielen und so eine stabile Verbrennung zu sichern, wohingegen bei anderen Betriebszuständen der Brennkraftmaschine eine solche Drallbewegung unerwünscht ist und vermieden werden soll.

Ein derartiger Einlasskanal ist mit DE 93 19 545 U1 beschrieben. Bei diesem Einlasskanal ist der Kanalquerschnitt durch eine Wand in zwei Teilkanäle unterteilt, die sich unmittelbar vor einem den Brennraum der Brennkraftmaschine verschließenden Einlassventil zu einem Einlassbereich vereinigen, wobei die Wand eine Teilungsebene bildet, die zumindest am Einlassbereich quer zur Achse des Zylinders der Brennkraftmaschine verläuft und dabei einer der Teilkanäle mit einer steuerbaren Drosselklappe versehen ist.

Ein solcher Einlasskanal hat den Nachteil, dass die in seinem Teilquerschnitt zusätzlich angeordnete Drosselklappe auch in geöffnetem Zustand den ungehinderten Durchtritt des Gases, insbesondere bei höheren Drehzahlen der Brennkraftmaschine, behindert. Dies führt zu ungewollten Wirbelbildungen im Strömungsverlauf und zu Füllungsgradverlusten. Ebenso sind Strömungsablösungen an der stromabliegenden Kante der die beiden Teilkanäle trennenden Wand unvermeidlich, so dass auch dadurch Füllungsgradverluste verursacht werden.

DE 198 09 052 A1 beschreibt einen Einlasskanal für eine Hubkolben-Brennkraftmaschine, bei dem an der inneren Wandung asymmetrisch ein Dehnkörper befestigt ist, welcher durch gesteuertes Aufblähen seines Volumens eine Rampe bildet und damit den Querschnitt des Einlasskanals asymmetrisch verändert.

Damit ist zwar die Geometrie des Einlasskanals und somit auch das Strömungsverhalten der durch den Einlasskanal geführten Gase beeinflussbar. Allerdings wird durch die Rampenbildung infolge des sich aufblähenden Dehnkörpers der Querschnitt des Kanals reduziert, so dass damit die Ladungsmenge für den jeweiligen Zylinder gegenüber einem Betrieb ohne Rampe reduziert wird.

Bei Hubkolben-Brennkraftmaschinen ist es auch bekannt, zumindest einen Einlasskanal von mehreren für jeweils einen Zylinder als Drallkanal auszubilden, in dem konzentrisch zur Achse des zugehörigen Einlassventils die Wände dieses Kanals spiralförmig ausgebildet sind. (Vergleiche Beilage "Shell-Lexikon" Folge 6 in DE-Zeitschrift ATZ/MTZ, Heft 10/1995).

Ein solcher Drallkanal wird meist neben einem ebenfalls durch ein Einlassventil gesteuerten Füllkanal angeordnet. Drallkanal und/oder Füllkanal sind durch Drosselklappen zu- oder abzuschalten. Der Drallkanal kann allerdings lediglich auf eine Drall-Intensität eingerichtet werden. Er ist nicht variabel. Ein Anpassen des Dralls an besondere aktuelle Betriebszustände der Brennkraftmaschine ist nicht möglich. Durch das Erfordernis von mindestens zwei Einlasskanälen pro Zylinder und die dafür erforderliche Einlasssteuerung sind Brennkraftmaschinen mit solchen Einlasskanälen relativ teuer in der Herstellung.

Der Erfindung liegt die Aufgabe zugrunde, einen Einlasskanal der oben beschriebenen Art so zu verbessern, dass er ohne Querschnittsreduzierung sowohl als Füllkanal mit geringer Ansaugstromumlenkung als auch als Drallkanal mit einer gewollt starken drallbildenden Umlenkung des Ansaugstromes arbeiten kann und mit dem stufenlos oder in Stufen alle Positionen zwischen einem Füllkanal und einem extremen Drallkanal zur Optimierung der Drallintensität für das jeweilige Betriebesverhalten der Brennkraftmaschine einstellbar sind.

Die US 3,868,940 und die US 3,884,209 offenbaren jeweils einen Einlasskanal für eine Verbrennungsmaschine. Eine drehbar gelagerte Luftschaufel teilt die Einlassluft in zwei Teilströme mit entgegengesetztem Drall.

Die Erfindung löst diese Aufgabe mit den Merkmalen des Patentanspruches 1. Die Unteransprüche haben vorteilhafte Weiterbildungen der Erfindung zum Gegenstand.

Die Anordnung einer Ausbuchtung an der Wand des Einlasskanals bzw. im Wand-Mantel-Bereich der Ventil-Nahe-Region, d.h. vorzugsweise im Bereich vor dem Ventilteller des Einlassventils, wirkt ohne Eingriff der Leiteinrichtung oder der Leitfläche auf die Gasströmung, also in einer ersten Extremstellung der Leiteinrichtung oder Leitfläche, in der die Ausbuchtung oder Mulde völlig geöffnet ist oder offen liegt, als Drallerzeuger. Dem durch den Einlasskanal und durch das Einlassventil in den Zylinderraum einströmenden Frischgas wird ein intensiver Drall aufgezwungen.

Ein solches Verhalten ist erwünscht, um insbesondere bei einem mageren Frischgasgemisch eine gute Durchbrennung zu erzielen.

Befindet sich jedoch die Leitfläche in ihrer anderen Extremstellung, dann deckt sie die Ausbuchtung vollständig ab, und es verbleibt ein glatter auf das Einlassventil gerichteter Einlasskanal. Durch diese Kanalform kann das Frischgas ohne wesentliche Umlenkung und Verwirbelung, also ohne Drosselung, in den Zylinderraum einströmen. Dieses Verhalten ist erwünscht bei Volllastbetrieb der Brennkraftmaschine.

Bei freigegebener Ausbuchtung an der Wand des Einlasskanals, also bei einer Drallerzeugung, wird im Gegensatz zu bekannten verstellbaren Einlasskanälen der Querschnitt des Einlasskanals nicht verringert. Das bedeutet, dass auch im Betriebszustand der Brennkraftmaschine mit drallbehafteter Frischgaszuführung eine nur geringfügige Drosselung des Gasstromes eintritt. Die Brennkraftmaschine kann so insbesondere im Teillastbereich mit gutem Wirkungsgrad betrieben werden.

Von besonderem Vorteil ist es, dass die Leitfläche zwischen ihren beiden Extremstellungen innerhalb der Ausbuchtung jede beliebige gewünschte Stellung einnehmen kann. Damit kann die Intensität des Ladungsdralls in Abhängigkeit von den aktuellen Betriebsparametern der Brennkraftmaschine variiert werden.

In besonders einfacher und kostengünstiger Art kann die Lagerung der Leiteinrichtung an einer ohnehin bei Hubventilen vorhandenen Ventilschaftführung im Einlasskanalgehäuse erfolgen, die sich dann mit einem Teil ihrer Länge in den Kanalzuführteil des Einlasskanals erstreckt.

Das Gehäuse beinhaltet ferner mit Vorteil wenigstens eine Einlass und wenigstens eine Auslassöffnung, wobei an die Einlassöffnung die Kanalzuführregion und an die Auslassöffnung die Ventil-Nahe-Region anschließt.

Die im Einlasskanalgehäuse bzw. in der Ventil-Nahe-Region untergebrachte Leiteinrichtung kann jedoch auch als ein in der Grundform becherartiges Teil ausgebildet sein und sich mit seinem zylindrigen Außenumfang an einer zylindrigen Innenfläche des eigentlichen Einlasskanals abstützen.

Die Lagerung der Leiteinrichtung kann auch am Außenumfang und durch eine Lagerbohrung an der Ventilschaftführung gleichzeitig erfolgen.

Zum Verstellen der Leiteinrichtung bietet sich in vorteilhafter Weise ein an sich bekannter elektrisch angetriebener Stellmotor an, der je nach Bedarf als kontinuierlich verstellender Antrieb oder auch als Schrittmotor ausgebildet sein kann.

Ein Schrittmotor wird dann von Vorteil sein, wenn bei der konstruktiven Auslegung der Brennkraftmaschine erkannt wird, dass jeweils nur einige wenige Positionen der Leiteinrichtung erforderlich sind, um alle gewünschten Betriebsparameter zu erreichen. Damit kann eine Vereinfachung der den Stellmotor ansteuernden Steuereinrichtung erreicht werden.

Im Allgemeinen wird es ausreichend sein, bei einer mehrzylindrigen Brennkraftmaschine die Leiteinrichtungen in den Einlasskanälen alle gemeinsam durch einen einzigen Stellmotor zu verstellen.

Es kann jedoch von Vorteil sein, wenn bei mehrzylindrigen Brennkraftmaschinen die Leiteinrichtung jedes einzelnen Zylinders durch einen speziellen Stellmotor separat verstellbar ist und so der Einlasskanal jedes einzelnen Zylinders entsprechend den Parametern des Brennverhaltens in diesem Zylinder optimiert wird. Das Laufverhalten der Brennkraftmaschine kann damit verbessert werden.

Da die Leiteinrichtung im Einlasskanal ausschließlich dem Frischgasstrom ausgesetzt ist, unterliegt sie keiner größeren Wärmebelastung. Sie kann somit als kostengünstiges Blechformteil, als Metallgussteil (z. B. aus Leichtmetall) oder auch als Kunststoff-Formteil ausgeführt sein.

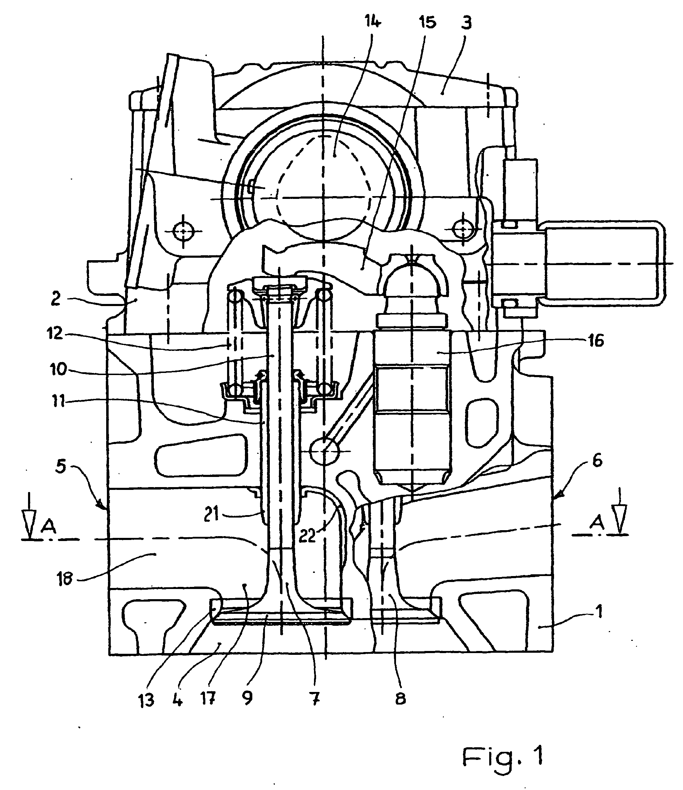

Ein Ausführungsbeispiel der Erfindung ist nachstehend anhand von Zeichnungen näher beschrieben. Es zeigen
- Fig. 1: einen Schnitt durch den Zylinderkopf einer Hubkolben-Brennkraftmaschine mit einem erfindungsgemäßen Einlasskanal;
- Fig. 2: und
- Fig. 3: jeweils einen Schnitt entlang der Linie AA in Figur 1 bei verschiedenen Einstellungen des Einlasskanals;
- Fig. 4: eine perspektivische Darstellung des Einlasskanals der Brennkraftmaschine nach Fig. 1, seiner Kanalzuführregion und der Lagerung des Tellerventils sowie der Leiteinrichtung und seines Stellelementes;
- Fig. 5: eine perspektivische Darstellung des separierten Einlasskanals nach Fig. 4;
- Fig. 6: eine perspektivische Darstellung der separierten Leiteinrichtung mit dem Stellelement nach Fig. 4.

Ein Zylinderkopf einer Brennkraftmaschine, umfassend ein Kopfunterteil 1, ein Kopfoberteil 2 und einen Zylinderkopfdeckel 3, befindet sich oberhalb eines hier nicht dargestellten Zylinderblockes und verschließt nach oben hin die Zylinderräume 4 der jeweiligen Arbeitszylinder. Im Kopfunterteil 1 ist für jeden der Zylinderräume 4 ein Einlasskanal 5 und ein Auslasskanal 6 eingeformt. Der Einlasskanal 5 wird jeweils durch ein als Hubventil ausgebildetes Einlassventil 7 geöffnet oder geschlossen. Der Auslasskanal 6 wird durch ein Auslassventil 8 geöffnet oder geschlossen.

Die Einlassventile 7 weisen jeweils einen Ventilteller 9 und einen Ventilschaft 10 auf. Der Ventilschaft 10 ist in einer Ventilschaftführung 11 verschiebbar gelagert. Jeweils eine Ventilfeder 12 hält das Einlassventil 7 in einer Schließlage, so dass der Ventilteller 9 auf einem Ventilsitzring 13 am Austritt des Einlasskanals 5 zum Zylinderraum 4 aufliegt.

Die Einlassventile 7 und die Auslassventile 8 werden in üblicher Weise durch eine im Kopfoberteil 2 gelagerte Nockenwelle 14 über Schlepphebel 15 betätigt. Die Schlepphebel 15 stützen sich auf hydraulischen Ausgleichselementen 16 ab.

Der Einlasskanal 5 weist einen ventilnahen Bereich 17 und eine Kanalzuführregion 18 auf. Der ventilnahe Bereich 17 ist mit einer radial zur Achse des Einlassventils 7 gerichteten Ausbuchtung 19 versehen, der gegenüber einer Strömungsleitnase 20 liegt.

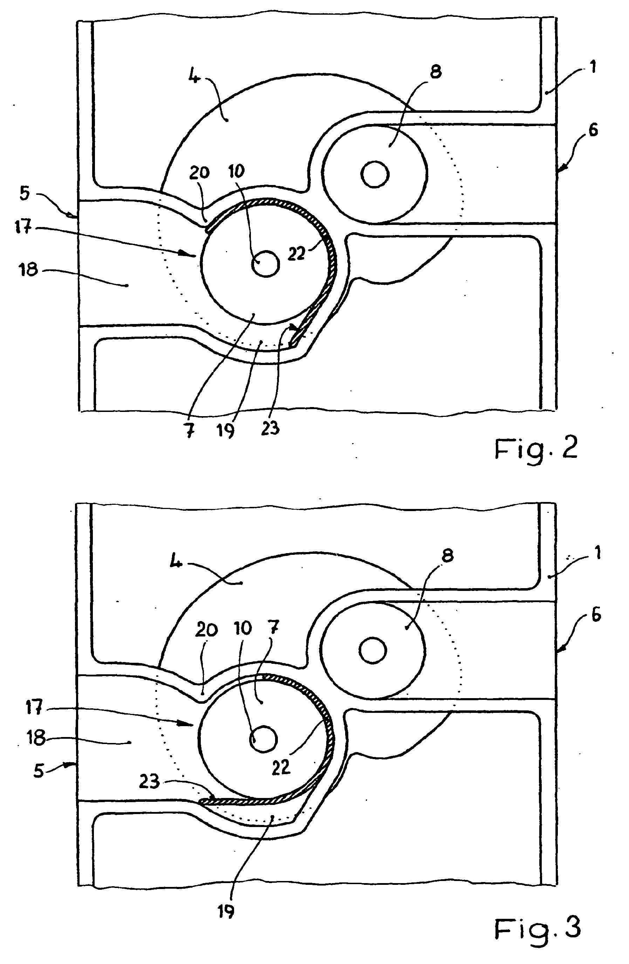

Die Ventilschaftführung 11 ragt mit einem unteren Teil 21 in den Einlasskanal 5. An diesem Teil 21 ist eine Leiteinrichtung 22 begrenzt verdrehbar gelagert. Die Leiteinrichtung 22 trägt eine Leitfläche 23. Die Leitfläche 23 gibt in einer Drehstellung der Leiteinrichtung 22 die Ausbuchtung 19 im Einlasskanal 5 gegenüber der Strömungsleitnase 20 frei (Fig. 2), und in einer anderen Drehstellung (Fig. 3) überdeckt die Leitfläche 23 die Ausbuchtung 19.

Zwischen diesen beiden mit Fig. 2 und Fig. 3 dargestellten Extremstellungen kann die Leiteinrichtung 22 jede beliebige Zwischenstellung einnehmen, so dass die Leitfläche 23 die Ausbuchtung 19 vollständig abdecken oder teilweise abdecken oder ganz freigeben kann.

Das Verdrehen der Leiteinrichtung 22 um das Teil 21 der Ventilschaftführung 11 erfolgt mit einem Stellelement 24 über eine Stellstange 25. Das Stellelement 24 wird elektrisch angesteuert von einem elektronischen Steuersystem in Abhängigkeit von aktuellen Parametern der Brennkraftmaschine.

Das elektronische Steuersystem kann Teil des ohnehin vorhandenen Motorsteuersystems sein.

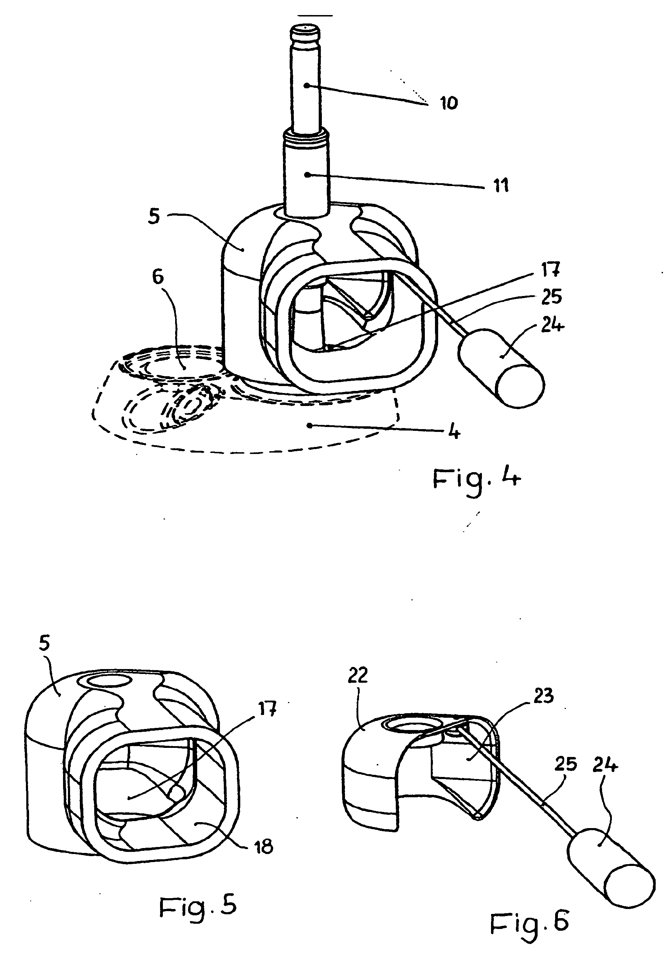

Wie die Figuren 4 und 6 zeigen, kann das Stellelement 24 relativ fern von der Leiteinrichtung 22 angeordnet sein. Die Anordnung des Stellelementes 24 wird vorzugsweise an der Außenfläche des Zylinderkopfes oder innerhalb der Ansauganlage erfolgen.

Wie Fig. 6 zeigt, ist die Leiteinrichtung 22 im Ausführungsbeispiel als Blechformteil ausgeführt.

Mit der Erfindung gelingt es, bei einer Hubkolben-Brennkraftmaschine mit nur einem Einlassventil und einem zugehörigen Einlasskanal sowohl eine direkte Volllast-Füllung als auch eine Füllung mit Drall zu realisieren, wobei die Intensität des Ladungsdralls in hohem Maße veränderbar ist.

Damit kann mit relativ geringem Aufwand die Verbrennung bei unterschiedlichen Lastbereichen der Brennkraftmaschine optimiert werden. Es können gegenüber einer Brennkraftmaschine mit einem unveränderbaren Einlasskanal Verbesserungen im Kraftstoffverbrauch, im Drehmomentverlauf und im Abgasverhalten erzielt werden.

Gegenüber einem Einlasssystem mit mehreren Einlassventilen kann die Brennkraftmaschine kostengünstiger hergestellt werden, sie ist unkomplizierter, weist ein geringeres Gewicht auf, und sie hat weniger innere Reibung. Durch die geringere Anzahl der bewegten Teile ist auch das mechanische Geräusch geringer.

Die Erfindung ist sowohl für Ottomotoren als auch für Dieselmotoren bei beliebiger Zylinderzahl anwendbar.

### Bezugszeichenliste

- Kopfunterteil: 1
- Kopfoberteil: 2
- Zylinderkopfdeckel: 3
- Zylinderraum: 4
- Einlasskanal: 5
- Auslasskanal: 6
- Einlassventil: 7
- Auslassventil: 8
- Ventilteller: 9
- Ventilschaft: 10
- Ventilschaftführung: 11
- Ventilfeder: 12
- Ventilsitzring: 13
- Nockenwelle: 14
- Schlepphebel: 15
- Ausgleichselement: 16
- Ventilnaher Bereich: 17
- Kanalzuführregion: 18
- Ausbuchtung: 19
- Strömungsleitnase: 20
- Teil: 21
- Leiteinrichtung: 22
- Leitfläche: 23
- Stellelement: 24
- Stellstange: 25

## Patentansprüche

1. Einlasskanal, insbesondere für eine Hubkolben-Brennkraftmaschine, umfassend eine Kanalzuführregion (18) und eine daran anschließende Ventil-Nahe-Region (17), wobei die Ventil-Nahe-Region (17) einen Wand-Mantel-Bereich aufweist, in den eine Ausbuchtung (19) ausgeformt ist, wobei die Ausbuchtung (19) durch eine in die Ventil-Nahe-Region (17) eingepasste Leiteinrichtung verschließbar ist, **dadurch gekennzeichnet, dass** die Leiteinrichtung (22) mit einem zylindrigen Außenumfang an einer zylindrigen Gehäuseinnenfläche der Ventil-Nahe-Region des Einlasskanals (5) drehbar gelagert ist.

2. Einlasskanal nach Anspruch 1, **dadurch gekennzeichnet, dass** der Einlasskanal von einem Gehäuse umfasst ist, in welchem wenigstes ein Einlassventil aufnehmbar ist und/oder führbar ist, wozu das Gehäuse wenigstens eine Schaftführungsöffnung aufweisen kann.

3. Einlasskanal nach Anspruch 2, **dadurch gekennzeichnet, dass** das Gehäuse wenigstens eine Einlass- und wenigstens eine Auslassöffnung aufweist, wobei sich an die Einlassöffnung die Kanalzuführregion und an die Auslassöffnung die Ventil-Nahe-Region (17) im Gehäuse anschließt.

4. Einlasskanal nach einem der vorhergehenden Ansprüche, **dadurch gekennzeichnet, dass** sich die Ausbuchtung ausgehend von der Kanalzuführregion (18) in den Wand-Mantel-Bereich der Ventil-Nahe-Region (17) erstreckt.

5. Einlasskanal nach Anspruch 1, **dadurch gekennzeichnet, dass** die Leiteinrichtung (22) zum Öffnen und Schließen der Ausbuchtung (19)(7) zwischen zwei Extremstellungen variabel verdrehbar gelagert ist.

6. Einlasskanal nach Anspruch 1 oder 5, **dadurch gekennzeichnet, dass** die Leiteinrichtung (19) eine Leitfläche (23) aufweist.

7. Einlasskanal nach einem der vorhergehenden Ansprüche, **dadurch gekennzeichnet, dass** in der Ventil-Nahe-Region (17) ein Einlassventil mit einem Schaft (10) angeordnet ist und die Leiteinrichtung (22) verdrehbar um die Achse des Ventilschafts angeordnet ist.

8. Einlasskanal nach einem der vorhergehenden Ansprüche, **dadurch gekennzeichnet, dass** die Leiteinrichtung (22) an einem in den Kanalzuführteil (18) des Einlasskanals (5) ragenden Teil (21) einer Ventilschaftführung (11) drehbar gelagert ist.

9. Einlasskanal nach einem der vorhergehenden Ansprüchen, **dadurch gekennzeichnet, dass** die Leiteinrichtung (22) sowohl an einem Teil (21) einer in den Einlasskanal (5) oder der Ventil-Nahe-Region ragenden Ventilschaftführung (11) als auch an einem zylindrigen Außenumfang, der an einer zylindrigen Innenfläche der Ventil-Nahe-Region des Einlasskanals (5) anliegt, drehbar gelagert ist.

10. Einlasskanal nach einem der vorhergehenden Ansprüchen, **dadurch gekennzeichnet, dass** die Leiteinrichtung (22) ein Stellelement (24) aufweist.

11. Einlasskanal nach Anspruch 10, **dadurch gekennzeichnet, dass** das Stellelement mit einem elektronischen Steuergerät motorisch ansteuerbar ist.

12. Einlasskanal nach einem der Ansprüche 10 oder 11, **dadurch gekennzeichnet, dass** das Stellelement (24) als elektrisch angetriebener Stellmotor ausgeführt ist.

13. Einlasskanal nach einem der Ansprüche 10 bis 12, **dadurch gekennzeichnet, dass** das Stellelement (24) als Schrittmotor ausgebildet ist.

14. Einlasskanal nach Anspruch 10 bis 13, **dadurch gekennzeichnet, dass** jedem Zylinder einer mehrzylindrigen Brennkraftmaschine ein eigenes Stellelement (24) zugeordnet ist.

15. Einlasskanal nach Anspruch 10 bis 14, **dadurch gekennzeichnet, dass** die Leiteinrichtungen (22) aller Zylinder oder Gruppen von Zylindern einer mehrzylindrigen Brennkraftmaschine von einem gemeinsamen Stellelement (24) betätigt sind.

16. Einlasskanal nach einem oder mehreren der vorhergehenden Ansprüche, **dadurch gekennzeichnet, dass** die Leiteinrichtung (22) als Blechformteil, Metallgussteil oder als Kunststoff-Formteil ausgeführt ist.

17. Einlasskanal nach Anspruch 11, **dadurch gekennzeichnet, dass** das elektronische Steuergerät ein ohnehin vorhandenes elektronisches Motorsteuergerät ist.

18. Zylinderkopf oder Brennkraftmaschine mit einem Zylinderkopf, **gekennzeichnet durch** einen in dem Zylinderkopf ausgebildeten Einlasskanal nach einem oder mehreren der vorhergehenden Ansprüche.

## Claims

1. An intake port, especially for a reciprocating internal combustion engine, comprising a port feeding region (18) and a close-to-valve region (17) which is adjacent thereto, with the close-to-valve region (17) having a wall jacket region in which an indentation (19) is formed, with the indentation (19) being sealable by a guide device fitted into the close-to-valve region (17), **characterized in that** the guide device (22) is held in a rotatable manner with a cylindrical outside circumference on a cylindrical inside surface of the housing of the close-to-valve region of the intake port (5).

2. An intake port according to claim 1, **characterized in that** the intake port is enclosed by a housing in which at least one intake valve can be accommodated and/or guided, for which purpose the housing may comprise at least one stem guide opening.

3. An intake port according to claim 2, **characterized in that** the housing comprises at least one intake opening and at least one outlet opening, with the port feeding region being adjacent to the intake opening and the close-to-valve region (17) to the outlet opening in the housing.

4. An intake port according to one of the preceding claims, **characterized in that** the indentation, starting from the port feeding region (18), extends to the wall jacket region of the close-to-valve region (17).

5. An intake port according to claim 1, **characterized in that** the guide device (22) is held to be variably twistable between two extreme positions for opening and closing the indentation (19 (7).

6. An intake port according to claim 1 or 5, **characterized in that** the guide device (19) comprises a guide surface (23).

7. An intake port according to one of the preceding claims, **characterized in that** an intake port with a stem (10) is arranged in the close-to-valve region (17) and the guide device (22) is arranged to be twistable about the axis of the valve stem.

8. An intake port according to one of the preceding claims, **characterized in that** the guide device (22) is held in a rotatable manner on a part (21) of a valve stem guide (11) protruding into the port feeding part (18) of the intake port (5).

9. An intake port according to one of the preceding claims, **characterized in that** the guide device (22) is held in a rotatable manner both on a part (21) of a valve stem guide (11) protruding into the intake port (5) or the close-to-valve region and an cylindrical outside circumference which rests on a cylindrical inside surface of the close-to-valve region of the intake port (5).

10. An intake port according to one of the preceding claims, **characterized in that** the guide device (22) comprises an actuator (24).

11. An intake port according to claim 10, **characterized in that** the actuator can be triggered in a motive manner with an electronic control device.

12. An intake port according to one of the claims 10 or 11, **characterized in that** the actuator (24) is arranged as an electrically driven servomotor.

13. An intake port according to one of the claims 10 to 12, **characterized in that** the actuator (24) is arranged as a stepper motor.

14. An intake port according to one of the claims 10 to 13, **characterized in that** a separate actuator (24) is associated with each cylinder of a multi-cylinder internal combustion engine.

15. An intake port according to one of the claims 10 to 14, **characterized in that** the guide devices (22) of all cylinders or groups of cylinders of a multi-cylinder internal combustion engine are actuated by a common actuator (24).

16. An intake port according to one or several of the preceding claims, **characterized in that** the guide device (22) is arranged as a sheet-metal formed part, cast metal part or plastic molded part.

17. An intake port according to claim 11, **characterized in that** the electronic control device is an electronic motor control device which is present anyway.

18. A cylinder head or internal combustion engine with a cylinder head, **characterized by** an intake port formed in the cylinder head according to one or several of the preceding claims.

## Revendications

1. Conduit d'admission, en particulier pour un moteur à combustion interne à piston alternatif, comprenant une région d'amenée au conduit (18) et une région proche des soupapes (17) qui lui fait suite, laquelle région proche des soupapes (17) présente une zone d'enveloppe de paroi dans laquelle un creux (19) est formé, ce creux (19) pouvant être fermé par un dispositif directeur ajusté dans la région proche des soupapes (17), **caractérisé en ce que** le dispositif directeur (22) est supporté avec possibilité de rotation par une circonférence extérieure cylindrique dans une surface intérieure cylindrique du corps de la région proche des soupapes du conduit d'admission (5).

2. Conduit d'admission selon la revendication 1, **caractérisé en ce que** le conduit d'admission est entouré d'un corps dans lequel au moins une soupape d'admission peut être logée et/ou guidée, ce pour quoi le corps peut présenter au moins une ouverture de guidage de tige.

3. Conduit d'admission selon la revendication 2, **caractérisé en ce que** le corps présente au moins une ouverture d'admission et une ouverture d'échappement, la région d'amenée au conduit se raccordant dans le corps au niveau de l'ouverture d'entrée et la région proche des soupapes (17) au niveau de l'ouverture d'échappement.

4. Conduit d'admission selon l'une des revendications précédentes, **caractérisé en ce que** le creux s'étend à partir de la région d'amenée au conduit (18) dans la zone d'enveloppe de paroi de la région proche des soupapes (17).

5. Conduit d'admission selon la revendication 1, **caractérisé en ce que** le dispositif directeur (22) est supporté avec possibilité de rotation variable entre deux positions extrêmes pour ouvrir et fermer le creux (19, 7).

6. Conduit d'admission selon la revendication 1 ou 5, **caractérisé en ce que** le dispositif directeur (19) présente une surface directrice (23).

7. Conduit d'admission selon l'une des revendications précédentes, **caractérisé en ce qu'**il est prévu dans la région proche des soupapes (17) une soupape d'admission avec une tige (10) et le dispositif directeur (22) est disposé avec possibilité de rotation autour de l'arbre de la tige de soupape.

8. Conduit d'admission selon l'une des revendications précédentes, **caractérisé en ce que** le dispositif directeur (22) est supporté sur une partie (21) d'un guide de tige de soupape (11) qui dépasse dans la partie d'amenée au conduit (18) du conduit d'admission (5).

9. Conduit d'admission selon l'une des revendications précédentes, **caractérisé en ce que** le dispositif directeur (22) est supporté avec possibilité de rotation aussi bien sur une partie (21) d'un guide de tige de soupape (11) qui dépasse dans le conduit d'admission (5) ou dans la région proche des soupapes que sur une circonférence extérieure cylindrique qui repose sur une surface intérieure cylindrique de la région proche des soupapes du conduit d'admission (5).

10. Conduit d'admission selon l'une des revendications précédentes, **caractérisé en ce que** le dispositif directeur (22) présente un élément de réglage (24).

11. Conduit d'admission selon la revendication 10, **caractérisé en ce que** l'élément de réglage peut être actionné de façon motorisée avec un appareil de commande électronique.

12. Conduit d'admission selon l'une des revendications 10 ou 11, **caractérisé en ce que** l'élément de réglage (24) est réalisé comme un moteur de réglage à entraînement électrique.

13. Conduit d'admission selon l'une des revendications 10 à 12, **caractérisé en ce que** l'élément de réglage (24) est réalisé comme un moteur pas à pas.

14. Conduit d'admission selon la revendication 10 à 13, **caractérisé en ce que** chaque cylindre d'un moteur à combustion interne à plusieurs cylindres est associé à un élément de réglage (24) propre.

15. Conduit d'admission selon la revendication 10 à 14, **caractérisé en ce que** les dispositifs directeurs (22) de tous les cylindres ou groupes de cylindres d'un moteur à combustion interne à plusieurs cylindres sont actionnés par un élément de réglage (24) commun.

16. Conduit d'admission selon l'une des revendications précédentes, **caractérisé en ce que** le dispositif directeur (22) est réalisé comme une pièce de tôle mise en forme, une pièce en fonte métallique ou une pièce moulée en matière plastique.

17. Conduit d'admission selon la revendication 11, **caractérisé en ce que** l'appareil de commande électronique est un appareil de commande du moteur électronique existant.

18. Culasse de cylindre ou moteur à combustion interne avec une culasse de cylindre, **caractérisé en ce qu'**il comprend, formé dans la culasse, un conduit d'admission selon l'une des revendications précédentes.
